# EUROPEAN PATENT APPLICATION

(11) **EP 1 995 017 A1**
(43) Date of publication of application: **26.11.2008**
(21) Application number: 06715064.9
(22) Date of filing: 02.03.2006
(51) Int. Cl.: B23Q 1/72, B23B 47/26

(54) **MACHINE TOOL MAIN SPINDLE BALANCER**

(71) Applicant: Pascal Engineering Corporation, Itami-shi Hyogo 664-8502 (JP)
(72) Inventor: KITAURA, Ichiro, Itami-shi, Hyogo 6648502 (JP); KIMURA, Seiji, Itami-shi, Hyogo 6648502 (JP)
(74) Representative: Roberts, Mark Peter
(86) International application number: PCT/JP2006/303955
(87) International publication number: WO 2007/099632

(57) **Abstract**

Provided is a machine tool spindle balancer that stably pulls and biases the spindle unit upward and thus reduces the load of the lift means for moving the spindle unit vertically, is easily applicable to existing machine tools, highly durable, downsizable, and has a simple structure advantageous in production cost.

A spindle balancer 30 comprises a gas spring 31 having a cylinder body 32, a rod 33, and a compressed gas. The gas spring 31 is provided above the spindle unit 10. The bottom end of the rod 33 is coupled to the spindle unit 10 so that the spindle unit is pulled and biased upward by the biasing force of the gas spring 31 that is applied on the rod 33, whereby the biasing force of the gas spring 31 serves to reduce the load of the lift mechanism 20.

## Description

### TECHNICAL FIELD

The present invention relates to a machine tool spindle balancer for pulling and biasing the spindle unit upward by a gas spring to reduce the load of the lift means for moving the spindle unit vertically.

### BACKGROUND TECHNOLOGY

Conventionally, a machine tool such as a machining center is provided with a spindle unit having a spindle on which a tool is mounted and an electric motor for rotating the spindle. The spindle unit is supported and moved vertically by a lift mechanism. Such a lift mechanism generally comprises a vertical ball screw shaft, a ball screw nut screwed on the ball screw shaft and coupled to the spindle unit, and an electric motor. The electric motor rotates the ball screw shaft to move the ball screw nut and thus the spindle unit vertically.

In the above machine tool, the lift mechanism has to support and move a heavy spindle unit vertically. Therefore, problems occur such as that the accuracy of the vertical position of the spindle unit may deteriorate. It is difficult to move the spindle unit vertically at much higher speeds, and the lift mechanism is increased in size, leading to higher production cost. Hence, various spindle balancers designed to reduce the load of the lift mechanism of the machine tool are in practical use (for example, see Patent Documents 1 to 4).

The spindle balancer of Patent Document 1 comprises a hydraulic cylinder provided above the spindle unit, a direction switching valve connected to two oil chambers of the hydraulic cylinder that are separated by a piston, an oil pressure supply mechanism supplying an oil pressure to the hydraulic cylinder via the direction switching valve, and a control unit controlling the direction switching valve. The hydraulic cylinder has a piston rod extending downward and connected to the spindle unit. When the spindle unit is moved vertically by the lift mechanism, in which the piston rod of the hydraulic cylinder is extended/withdrawn in sync with the vertical movement of the spindle unit and an upward force nearly equivalent to the weight of the spindle unit is generated by the hydraulic cylinder.

The spindle balancer of Patent Document 2 comprises a tension spring, a chain, and a sprocket. The tension spring is provided vertically in a column. The chain is passed around the sprocket in a U-letter shape above the spindle unit. The bottom end of the tension spring is coupled to the bed. The chain is coupled to the top end of the tension spring at one end and to the spindle unit at the other. The tension spring pulls and biases the spindle unit upward via the chain and sprocket. This spindle balancer requires a damping apparatus for suppressing the vibration of the tension spring.

On the other hand, the applicant of this application has proposed and realized a spindle balancer having a gas spring as in Patent Documents 3 and 4, in which the gas spring has a cylinder body filled with a compressed gas and a rod inserted in the cylinder body to reciprocate. The gas spring is provided downward between the spindle unit and the underlying bed. The cylinder body is fitted in the spindle unit. The compressed gas biases the rod downward in relation to the cylinder body. The bottom end of the rod is received by the bed. The gas spring pushes and biases the spindle unit upward.

Patent Document 1: Japanese Laid-Open Patent Application No. H06-297217;
Patent Document 2: Japanese Laid-Open Patent Application No. 2003-191145;
Patent Document 3: Japanese Laid-Open Patent Application No. 2002-96229; and
Patent Document 4: Japanese Laid-Open Patent Application No. 2002-254265.

### DISCLOSURE OF THE INVENTION

### PROBLEMS TO BE SOLVED BY THE INVENTION

In the spindle balancer of Patent Document 1, it is difficult for the control unit to control the direction switching valve so that the hydraulic cylinder generates an upward force equivalent to the weight of the spindle unit while the lift mechanism moves the spindle unit vertically. Therefore, it is difficult to move the spindle unit vertically at a high speed because of the restriction by the hydraulic cylinder. Provision of the direction switching valve, hydraulic supply mechanism, and control unit in addition to the hydraulic cylinder leads to a complex structure and higher production cost.

In the spindle balancer of Patent Document 2, the spindle unit is pulled and biased upward by the tension spring. The tension spring elastically deforms in association with the vertical movement of the spindle unit. It is difficult to increase the vertical stroke of the spindle unit while maintaining the initial function of the tension spring. Furthermore, the tension spring has to have an initial tension. The ends where stress concentration occurs may more easily be deteriorated or damaged, whereby the spring may fail to pull and bias the spindle unit upward in a stable manner. In addition, a damping apparatus for the tension spring is required, which is disadvantageous for simplifying the structure and reducing the production cost.

In the spindle balancers of Patent Documents 3 and 4, the gas spring is used to bias the spindle unit upward, overcoming the problems associated with Patent Documents 1 and 2. However, the gas spring pushes and biases the spindle unit from below and is interposed between the spindle unit and the underlying bed. The gas spring may be an obstacle to the machining operation. Furthermore, the cylinder body has to be mounted on the spindle unit, which makes it difficult to apply to existing machine tools.

Furthermore, as the spindle unit is increased in size, it becomes heavier. The lift mechanism moves the spindle unit along with the cylinder body. In other words, the gas spring pushes and biases the significantly heavy spindle unit and cylinder body upward. Then, the gas spring has to be increased in size. Even if the gas spring is provided upside down and the cylinder body is attached to the bed, the same problem occurs.

The purpose of the present invention is to provide a machine tool spindle balancer that stably pulls and biases the spindle unit upward and thus reliably and effectively reduces the load of the lift means for moving the spindle unit vertically, is easily applicable to existing machine tools, highly durable, downsizable, and has a simple structure advantageous in production cost.

### PROBLEM RESOLUTION MEANS

The machine tool spindle balancer of the present invention is a machine tool spindle balancer for a machine tool comprising a spindle unit having a spindle for mounting a tool, an electric motor for rotating the spindle and a lift means for moving the spindle unit vertically, characterized in that : the machine tool spindle balancer comprises a gas spring having a cylinder body, a rod reciprocating in relation to the cylinder body over a specific stroke at least nearly equal to a vertical stroke of the spindle unit and having at least one end portion protruding from one end of the cylinder body, and a compressed gas contained in at least a part of the cylinder body and biasing the rod in a retracting direction in which the one end portion of the rod that protrudes from the cylinder body is reduced; the rod is coupled to the spindle unit at one end so that the spindle unit is pulled and biased upward by a biasing force of the gas spring that is applied on the rod; and the biasing force of the gas spring serves to reduce a load of the lift means.

Preferably, the present invention may adopt the following various constitutions. The rod has at an end a piston part fitted in the cylinder body in an airtight and slidable manner, a compressed gas operation chamber containing the compressed gas is formed in the cylinder body on a rod side of the piston part, and a compressed gas filled chamber that is independent from the compressed gas operation chamber, is filled with the compressed gas and communicates with the compressed gas operation chamber via a gas communication passage is provided (claim 2).

The compressed gas filled chamber can be provided separately from the gas spring or integrally with the gas spring. In the latter case, the cylinder body can have an inner barrel in which the piston part is fitted and an outer barrel provided radially outside the inner barrel and the compressed gas filled chamber is formed between the inner and outer barrels (claim 3).

The rod has one end rod part forming the one end portion and the other end rod part having a larger diameter than the one end rod part and coaxially coupled to an end of the one end rod part to protrude from the other end of the cylinder body, and the compressed gas operation chamber containing the compressed gas is formed nearly in an entire area of the cylinder body; and a coupling part between the one end rod part and the other end rod part is housed in the cylinder body and the coupling part has an annular pressure receiving part receiving the gas pressure of the compressed gas in the compressed gas operation chamber (claim 4).

The cylinder body of the gas spring is provided vertically above the spindle unit and one end of the rod is coupled to the top end of the spindle unit (claim 5). Alternatively, one end of the rod can be coupled to the top end of the spindle unit via a chain and sprockets (claim 6).

In another possible structure, the other end of the cylinder body may be coupled to the spindle unit so that the spindle unit is pulled and biased upward by the biasing force of the gas spring.

### ADVANTAGES OF THE INVENTION

According to the machine tool spindle balancer of the present invention, the extendable gas spring reliably pulls and biases the spindle unit upward while assuring the vertical movement of the spindle unit of a degree of freedom. An upward force nearly equal to the weight of the spindle unit is produced even when the spindle unit 10 is in vertical motion, effectively supporting the spindle unit. In other words, the size and shape of the gas spring and the pressure of the compressed gas are appropriately determined according to the weight of the spindle unit. Then, the gas spring uses the pressure of the compressed gas to stably pull and bias the spindle unit upward, reliably and effectively reducing the load of the lift mechanism. Consequently, the lift mechanism can be downsized, the accuracy of the vertical positioning of the spindle unit by the lift mechanism 20 or the machining accuracy can reliably be improved, and the spindle unit having a further high vertical moving speed can be realized.

Furthermore, the gas spring is not provided between the spindle unit and underlying bed. The gas spring is not an obstacle to the machining operation. It is unnecessary to mount the gas spring on the spindle unit. The spindle unit does not need to have any particular mounting structure for the gas spring. The rod can easily be coupled to the spindle unit. It can easily be applied to an existing machine tool. The gas spring is highly durable unlike a tension spring. If the compressed gas in the cylinder body is reduced, the compressed gas is easily refilled and the gas spring is restored. It is unnecessary to mount the gas spring on the spindle unit. The spindle unit does not need to be increased in size more than necessary. The gas spring biases only the spindle unit. The gas spring can be downsized and simplify the structure, which is advantageous in production cost.

According to the machine tool spindle balancer of claim 2, the rod has at an end a piston part fitted in the cylinder body in an airtight and slidable manner. The rod is reliably guided to reciprocate in the cylinder body. The compressed gas operation chamber containing the compressed gas is formed in the cylinder body on a rod side of the piston part. The compressed gas in the compressed gas operation chamber reliably biases the rod in the retracting direction. The compressed gas filled chamber that is independent from the compressed gas operation chamber, filled with the compressed gas and communicates with the compressed gas operation chamber via the communication passage serves to suppress changes in the pressure of the compressed gas while the compressed gas operation chamber is subject to large volume changes as the rod reciprocates. Hence, the spindle unit is pulled and biased by nearly a constant biasing force.

According to the machine tool spindle balancer of claim 3, the cylinder body has an inner barrel in which the piston part is fitted and an outer barrel provided radially outside the inner barrel. The compressed gas filled chamber is formed between the inner and outer barrels. Therefore, the gas spring has an integrated compact compressed gas filled chamber. Then, the spindle balancer having a compact overall structure is advantageously mounted on an existing machine tool.

According to the machine tool spindle balancer of claim 4, the rod has one end rod part forming one end portion and the other end rod part having a larger diameter than the one end rod part and coaxially coupled to an end of the one end rod part to protrude from the other end of the cylinder body. The rod can reliably be guided to reciprocate in the cinder body. The compressed gas operation chamber containing the compressed gas is formed nearly in the entire area of the cylinder body. The coupling part between the one end rod part and other end rod part is housed in the cylinder body. The coupling part has an annular pressure receiving part receiving the gas pressure of the compressed gas in the compressed gas operation chamber, reliably retaining the rod and which is biased in the retracting direction by the compressed gas. The volume change of the compressed gas operation chamber as a result of the rod reciprocating, namely the change in the gas pressure of the compressed gas, can be suppressed to pull and bias the spindle unit by a nearly constant force. Furthermore, the rod does not slide directly on the inner surface of the cylinder body. The cylinder body does not need to have a precise mirror-finished inner surface, which is advantageous in producing the cylinder body.

According to the machine tool spindle balancer of claim 5, the cylinder body of the gas spring is provided vertically above the spindle unit. One end of the rod is coupled to the top end of the spindle unit. In this simplified structure, the spindle unit is reliably pulled and biased upward.

According to the machine tool spindle balancer of claim 6, one end of the rod is coupled to the top end of the spindle unit via a chain and sprockets. The spindle unit can be pulled and biased upward with an increased degree of freedom of positioning the gas spring.

### BRIEF EXPLANATION OF THE DRAWINGS

Fig.1 is s side view of a machine tool including the spindle balancer of embodiment 1 of the present invention.
Fig.2 is a vertical cross-sectional view of the gas spring of embodiment 1.
Fig.3 is a vertical cross-sectional view of the gas spring of embodiment 2.
Fig.4 is a vertical cross-sectional view of the gas spring of embodiment 3.
Fig.5 is a vertical cross-sectional view of the gas spring of embodiment 4.
Fig.6 is a side view of a machine tool including the spindle balancer of embodiment 5.

### EXPLANATION OF REFERENCE NUMERALS

M machine tool
10 spindle unit
13 spindle
14 tool
15 electric motor
20 lift mechanism
30, 30A, 30B, 30C, 30D machine tool spindle balancer
31, 31A, 31B, 31C, 31D gas spring
32, 32A, 32B, 32C, 32D cylinder body
33, 33B, 33C, 33D rod
34 compressed gas
40 inner barrel
40a gas communication passage
40b gas communication port
41 outer barrel
50, 50B, 50C compressed gas operation chamber
51A, 51B compressed gas filled chamber
51a gas hose
55 piston part
80, 80C one end rod part
81, 81C the other end rod part
82, 82C coupling part
85, 85C pressure receiving part
95 chain
96 sprocket

### BEST MODE FOR IMPLEMENTING THE INVENTION

The machine tool spindle balancer of the present invention comprises a gas spring having a cylinder body, a rod reciprocating in relation to the cylinder body over a specific stroke at least nearly equal to the vertical stroke of the spindle unit and having one end portion protruding from one end of the cylinder body, and a compressed gas contained in at least a part of the cylinder body and biasing the rod in the retracting direction in which the one end portion of the rod that protrudes from the cylinder body is reduced; the rod is coupled to the spindle unit at one end so that the spindle unit is pulled and biased upward by the biasing force of the gas spring that is applied on the rod.

### EMBODIMENT 1

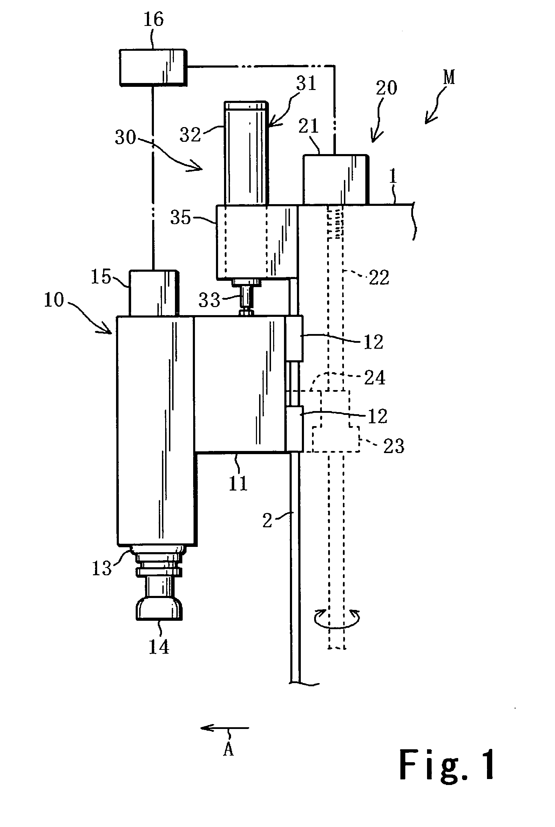

As shown in Fig.1, a machine tool spindle balancer 30 of the present invention (the spindle balancer 30) is applied to a machine tool M such as a vertical machining center. In Fig.1, the arrow A points to the front.

The machine tool M comprises a column 1, a spindle unit 10 vertically guided by the column 1, and a lift mechanism 20 moving the spindle unit 10 vertically. The machine tool M is provided with the machine tool spindle balancer 30 (the spindle balancer 30) comprising a gas spring 31 supporting the spindle unit 10 to reduce the load of the lift mechanism 20.

The column 1 has a vertical guide rail 2 at the front. The spindle unit 10 has a frame member 11, to the rear end of which sliders 12 are attached. The sliders 12 are engaged with the guide rail 2, whereby the spindle unit 10 is guided vertically.

The spindle unit 10 has a frame member 11, a spindle 13 supported at the front portion of the frame member 11 in a rotatable manner about a vertical axis to detachably mount a tool 14 at the bottom end thereof, and an electric motor 15 for rotating the spindle 13. The electric motor 15 is provided on the front portion of the frame member 11 at the top and directly connected to the spindle 13. The electric motor 15 is electrically connected to and controlled by a control unit 16 to rotate the spindle 13 and thus the tool 14.

The lift mechanism 20 has an electric motor 21 provided at the top of the column 1, a ball screw shaft 22 directly connected to and vertically extending from the electric motor 21, a ball screw nut 23 screwed on the ball screw shaft 22 and coupled to the spindle unit 10 via a coupling part 24. The electric motor 21 is electrically connected to and controlled by the control unit 16 to rotate the ball screw shaft 22, whereby the ball screw nut 23 and thus the spindle unit 10 moves vertically.

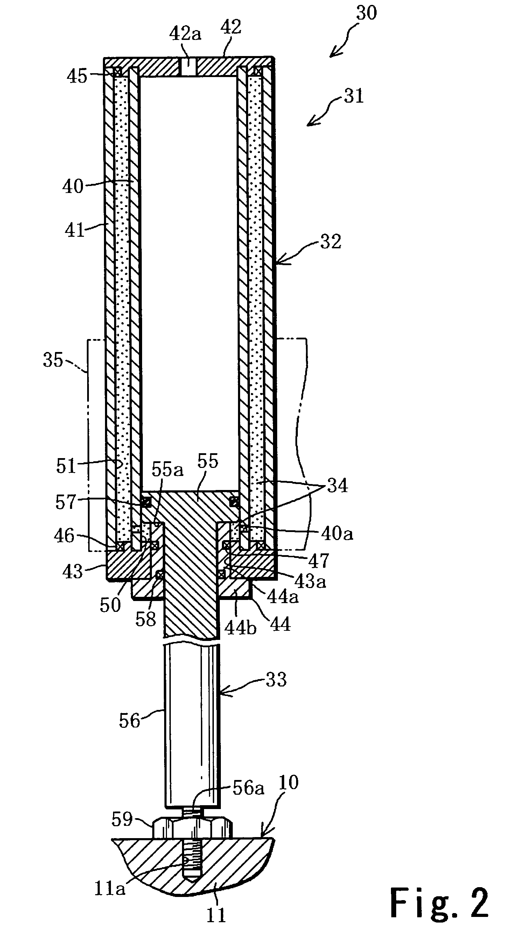

The spindle balancer 30 will be described in detail hereafter.
As shown in Figs. 1 and 2, the spindle balancer 30 pulls and biases the spindle unit 10 upward by the gas spring 31; thus, the biasing force of the gas spring 31 serve to reduce the load of the lift mechanism 20.

The gas spring 31 is vertically provided above the spindle unit 10. The gas spring 31 has a cylinder body 32, a rod 33, and the compressed gas 34 (for example compressed nitrogen gas). The cylinder body 32 is secured to the front wall of the column 1 for example by a bracket 35. The rod 33 extends from the cylinder body 32 downward.

As shown in Fig.2, the cylinder body 32 has an inner barrel 40, an outer barrel 41 provided radially outside the inner barrel 40, a top end wall 42 and a bottom end wall 43 fixed to the top and bottom ends of the inner and outer barrels 40 and 41, and a rod guide member 44 fixed to the bottom end wall 43. Sealing members 45 and 46 seal between the outer barrel 41 and the top and the bottom end walls 42 and 43.

The rod 33 has a piston part 55 which is fitted in the inner barrel 40 in an airtight and slidable manner. To this end, the inner barrel 40 has a mirror finished inner surface. The inner barrel 40 has at the bottom end portion a gas communication passage 40a consisting of multiple through-holes. The top end wall 42 has a breathing hole 42a. The bottom end wall 43 has a rod guide mounting bore 43a.

The rod guide member 44 has a barrel part 44a and an abutment part 44b in the form of a flange extending from the bottom end of the barrel part 44a. The barrel part 44a is fitted in the rod guide mounting bore 43a. A sealing member 47 seals between the barrel part 44a and the bottom end wall 43. The abutment part 44b abuts against the bottom end wall 43 from below and is fixed there. In this state, the barrel part 44a protrudes above the bottom end wall 43. The top end of the barrel part 44a is slightly above the gas communication passage 40a. When the piston part 55 is locked on the top end of the barrel part 44a, the piston part 55 cannot move down. Therefore, the gas communication passage 40a is never blocked by the piston part 55.

The rod 56, barrel part 44a, bottom end wall 43, and inner barrel 40 form a compressed gas operation chamber 50 containing a compressed gas 34 inside the cylinder body 32 below the piston part 55. The inner and outer barrels 40 and 41 and top and bottom end walls 42 and 43 form a compressed gas filled chamber 51 filled with the compressed gas 34 between the inner and outer barrels 40 and 41. In this way, the gas spring 31 has the compressed gas operation chamber 50 and the compressed gas filled chamber 51 that is independent from the compressed gas operation chamber 50 in a communicated manner. The compressed gas filled chamber 51 communicates with the compressed gas operation chamber 50 via the gas communication passage 40a.

The lengths of the rod 33 and cylinder body 32 are determined so that the rod 33 reciprocates in relation to the cylinder body 32 over a specific stroke at least nearly equal to the vertical stroke of the spindle unit 10. The rod 33 has a piston part 55 at the top end and a rod part 56 extending from the piston part 55 downward. The piston part 55 is fitted in the inner barrel 40 via a sealing member 57 in an airtight and slidable manner. The rod part 56 is inserted in and protrudes from the rod guide member 44 via a sealing member 58 in an airtight and slidable manner.

The piston part 55 has an underside forming an annular pressure receiving part 55a around the rod part 56. The pressure receiving part 55a receives the gas pressure of the compressed gas 34 in the compressed gas operation chamber 50, whereby the rod 33 is biased upward. Here, W (the biasing force of the gas spring 31) ≈ P (the gas pressure of the compressed gas 34) x S (the area of the pressure receiving part 55a). The gas pressure P of the compressed gas 34 and the area S of the pressure receiving part 55a are determined so that W is nearly equal to the weight of the spindle unit 10.

The rod part 56 has a screw shaft portion 56a at the bottom. A lock nut 59 is screwed on the screw shaft portion 56a. On the other hand, the frame member 11 of the spindle unit 10 has a screw hole 11a at the top. The screw shaft portion 56a is screwed in the screw hole 11a, whereby the lock nut 59 is pressed against the top surface of the frame member 11 and the bottom end of the rod 33 is coupled to the top end of the spindle unit 10. The screwing position of the lock nut 59 on the screw shaft portion 56a can be adjusted for fine tuning of the coupling position between the rod 33 and spindle unit 10.

The operation and advantages of the above spindle balancer 30 will be described hereafter.
The gas spring 31 has the cylinder body 32, rod 33, and compressed gas 34. The gas spring 31 is provided vertically above the spindle unit 10. The bottom end of the rod 33 is coupled to the top end of the spindle unit 10. Then, the gas spring 31 pulls and biases the spindle unit 10 upward.

When the lift mechanism 20 moves the spindle unit 10 downward while the gas spring 31 pulls and biases the spindle unit 10 upward, the rod 33 is advanced in relation to the cylinder body 32 of the gas spring 31, whereby the gas spring 31 is extended. When the lift mechanism 20 moves the spindle unit 10 upward, the rod 33 is withdrawn in relation to the cylinder body 32 of the gas spring 31, whereby the gas spring 31 is contracted.

In this way, the extendable gas spring 31 simplifies the structure in which the spindle unit 10 is reliably pulled and biased upward while assuring the vertical movement of the spindle unit 10 of a degree of freedom. An upward force nearly equal to the weight of the spindle unit 10 is produced when the spindle unit 10 is in rest position and even when the spindle unit 10 is in vertical motion.

In other words, the size and shape of the gas spring 31 and the pressure of the compressed gas 34 are appropriately determined according to the weight of the spindle unit 10. Then, the gas spring 31 uses the pressure of the compressed gas 34 to stably pull and bias the spindle unit 10 upward and thus reliably and effectively reduce the load of the lift mechanism20. Consequently, the lift mechanism 20 can be downsized, the accuracy of the vertical positioning of the spindle unit 10 by the lift mechanism 20 or the machining accuracy can reliably be improved, and the spindle unit 10 having a further high vertical moving speed can be realized.

Furthermore, the gas spring 31 is not provided between the spindle unit 10 and underlying bed. The gas spring 31 is not an obstacle to the machining operation. It is unnecessary to mount the gas spring 31 on the spindle unit 10. The spindle unit 10 does not need to have any particular mounting structure for the gas spring 31. The rod 33 can easily be coupled to the spindle unit 10. It can easily be applied to an existing machine tool M.

The gas spring 31 is highly durable unlike a tension spring. If the compressed gas 34 in the cylinder body 32 is reduced, the compressed gas 34 is easily refilled and the gas spring 31 is restored. It is unnecessary to mount the gas spring 31 on the spindle unit 10. The spindle unit 10 does not need to be increased in size more than necessary. The gas spring 31 biases only the spindle unit 10. The gas spring 31 can be downsized and simplify the structure, which is advantageous in production cost.

The rod 33 has at the top end portion the piston part 55 fitted in the cylinder body 32 in an airtight and slidable manner. The rod 33 is reliably guided to reciprocate in the cylinder body 32. The compressed gas operation chamber 50 containing the compressed gas 34 is formed in the cylinder body 32 on the rod side (lower side) of the piston part 55. The compressed gas 34 in the compressed gas operation chamber 50 reliably biases the rod 33 upward. The compressed gas filled chamber 51 that is independent from the compressed gas operation chamber 50, filled with the compressed gas 34, and communicates with the compressed gas operation chamber 50 via the communication passage 40a serves to suppress changes in the pressure of the compressed gas 34 while the compressed gas operation chamber 50 is subject to large volume changes as the rod 33 reciprocates. Hence, the spindle unit 10 is pulled and biased by nearly a constant biasing force.

The cylinder body 32 has the inner barrel 40 in which the piston part 55 is fitted and outer barrel 41 provided radially outside the inner barrel 40. The compressed gas filled chamber 51 is formed between the inner and outer barrels 40 and 41. Therefore, the gas spring 31 has an integrated compact compressed gas filled chamber 51. Then, the spindle balancer 30 having a compact overall structure is advantageously mounted on an existing machine tool M.

### EMBODIMENT 2

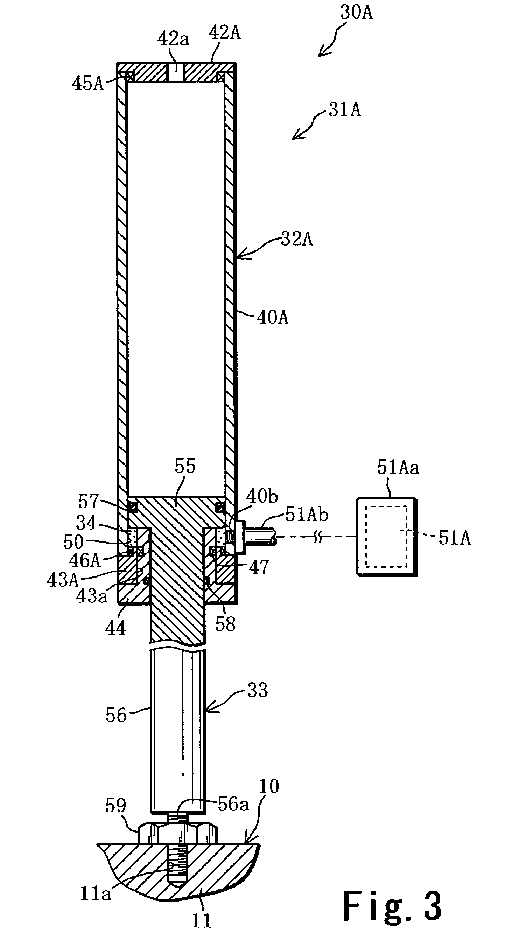

As shown in Fig.3, a spindle balancer 30A has a gas spring 31A and a compressed gas filled chamber 51A provided separately from the gas spring 31A. The gas spring 31A is applied to a machine tool M in place of the gas spring 31 of Embodiment 1. Here, the same components as in Embodiment 1 are given the same reference numbers and their explanation is omitted.

The gas spring 31A has a cylinder body 32A, a rod 33, and the compressed gas 34. The cylinder body 32A is different from the cylinder body 32 of Embodiment 1 in that the outer barrel 41 is eliminated and the inner barrel 40 and top and bottom end walls 42 and 43 are partly modified. The compressed gas operation chamber 50 is formed inside the cylinder body 32A.

The cylinder body 32A has a barrel 40A, top and bottom end walls 42A and 43A fixed to the top and bottom ends of the barrel 40A, and a rod guide member 44 fixed to the bottom end wall 43A. The barrel 40A corresponds to the inner barrel 40 of Embodiment 1. The barrel 40A has a communication port 40b facing the compressed gas operation chamber 50. Sealing members 45A and 46A seal between the barrel 40A and the top and bottom end walls 42A and 43A. The top end wall 42A has an air breathing hole 42a. The bottom end wall 43A has a rod guide mounting bore 43a.

A compressed gas filled chamber 51A filled with the compressed gas 34 is formed in a compressed gas filled unit 51Aa. A gas hose 51Ab extending from the compressed gas filled unit 51Aa is connected to the communication port 40b. The gas hose 51Ab and communication port 40b, which correspond to the gas communication passage, establish communication between the compressed gas operation chamber 50 and compressed gas filled chamber 51A. The gas spring 31A of the spindle balancer 30A can further be downsized compared with the gas spring 31 of Embodiment 1. The gas spring 31A advantageously require a smaller installation space. As for the rest, the same efficacy and effects as of Embodiment 1 can be obtained.

### EMBODIMENT 3

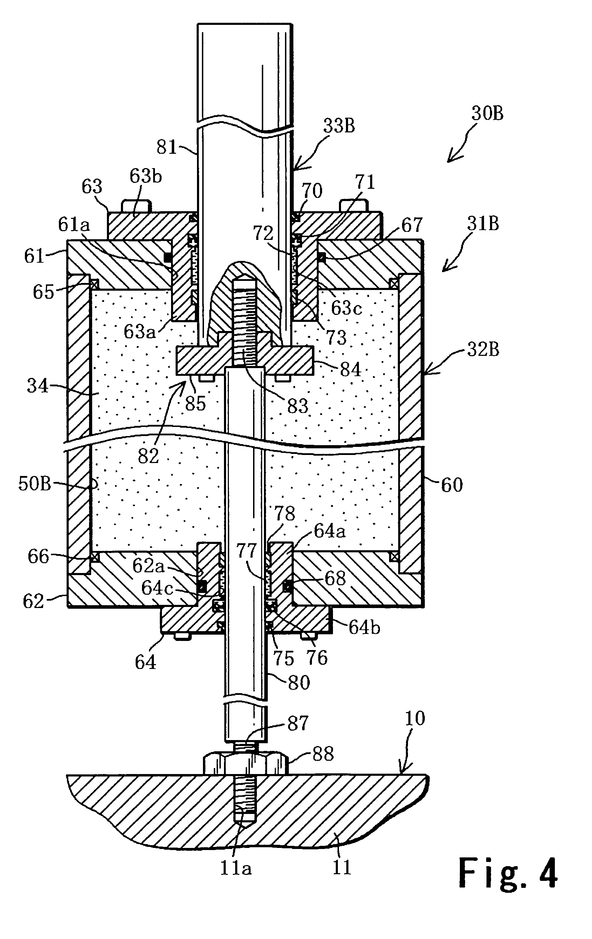

As shown in Fig.4, a spindle balancer 30B comprises a gas spring 31B. The gas spring 31B is applied to a machine tool M in place of the gas spring 31 of Embodiment 1. The gas spring 31B has a cylinder body 32B, a rod 33B, and the compressed gas 34. The rod 33 extends from the cylinder body 32B both upward and downward. A compressed gas operation chamber 50B containing the compressed gas 34 is formed nearly in the entire area of the cylinder body 32b.

The cylinder body 32B has a barrel 60, top and bottom end walls 61 and 62 fixed to the top and bottom ends of the barrel 60, a top rod guide member 63 fixed to the top end wall 61, and a bottom rod guide member 64 fixed to the bottom end wall 62. Sealing members 65 and 66 seal between the barrel 60 and the top and bottom end walls 61 and 62, respectively. The top and bottom end walls 61 and 62 have rod guide mounting bores 61a and 62a, respectively.

The top rod guide member 63 has a barrel part 63a and an abutment part 63b in the form of a flange extending from the top end of the barrel part 63a. The barrel part 63a is fitted in the rod guide mounting bore 61a. A sealing member 67 seals between the barrel part 63a and top end wall 61. On the inner surface of the barrel part 63a, a dust seal 70 is attached at the top, a sealing member 71 is attached under the dust seal 70, and a recess 63c is formed under the sealing member 71. The recess 63c is filled with lubricating grease 72. A highly slidable rod guide 73 is attached under the recess 63c. Here, the recess 63c can be filled with lubricating oil or nothing.

The bottom rod guide member 64 has a barrel part 64a and an abutment part 64b in the form of a flange extending from the bottom end of the barrel part 64a. The barrel part 64a is fitted in the rod guide mounting bore 62a. A sealing member 68 seals between the barrel part 64a and bottom end wall 62. On the inner surface of the barrel part 64a, a dust seal 75 is attached at the bottom, a sealing member 76 is attached above the dust seal 75, and a recess 64c is formed above the sealing member 76. The recess 64c is filled with lubricating grease 77. A highly slidable rod guide 78 is attached above the recess 64c. Here, the recess 64c can be filled with lubricating oil or nothing.

The lengths of the rod 33B and cylinder body 32B are determined so that the rod 33B reciprocates in relation to the cylinder body 32B over a specific stroke at least nearly equal to the vertical stroke of the spindle unit 10. The rod 33B has one end rod part 80 forming the bottom end portion protruding downward from the bottom rod guide member 64 of the cylinder body 32B and the other end rod part 81 having a larger diameter than the one end rod part 80 and coaxially coupled to the top end of the one end rod part 80 so as to protrude upward from the top rod guide member 63 of the cylinder body 32B.

The one end rod part 80 is slidably inserted in the bottom rod guide member 64 via the rod guide 78. The dust seal 75, sealing member 76, and grease 77 seal between the one end rod part 80 and bottom rod guide member 64. The other end rod part 81 is slidably inserted in the top rod guide member 63 via the rod guide 73. The dust seal 70, sealing member 71, and grease 72 seal between the other end rod part 81 and top rod guide member 63.

A coupling part 82 between the one end rod part 80 and the other end rod part 81 is housed in the cylinder body 32B. At the coupling part 82, a screw shaft portion 83 provided at the top of the one end rod part 80 is screwed in the other end rod part 81 via an locking member 84 in the form of a disc having a larger diameter than the other end rod part 81 to couple the one end rod part 80 and other end rod part 81. Then, the locking member 84 is fastened to these rods 80 and 81.

When the locking member 84 abuts against the barrel part 63a of the top rod guide member 63, the rod 32B is at the highest position. When the locking member 84 abuts against the barrel part 64a of the bottom rod guide member 64, the rod 32B is at the lowest position. The rod 32B reciprocates between the highest and lowest positions but is retained in between with the rods 80 and 81 remaining inserted in the rod guide members 64 and 63, respectively.

The locking member 84 has an underside forming an annular pressure receiving part 85 around the one end rod part 80. The pressure receiving part 85 receives the gas pressure of the compressed gas 34 in the compressed gas operation chamber 50B, whereby the rod 33B is biased upward. Here, W (the biasing force of the gas spring 31B) ≈ P (the gas pressure of the compressed gas 34) x S (the area of the pressure receiving part 85). The gas pressure P of the compressed gas 34 and the area S of the pressure receiving part 85 (namely, the diameters of the one end rod part 80 and the other end rod part 81) are determined so that W is nearly equal to the weight of the spindle unit 10.

The one end rod part 80 has a screw shaft portion 87 at the bottom. A lock nut 88 is screwed on the screw shaft portion 87. As in Embodiment 1, the screw shaft portion 87 is screwed in the screw hole 11a of the frame member 11 of the spindle unit 10, whereby the lock nut 88 is pressed against the top surface of the frame member 11 and the bottom end of the rod 33B is coupled to the top end of the spindle unit 10.

The rod 33B of the spindle balancer 30B has the one end rod part 80 forming the bottom end portion protruding downward from the bottom rod guide member 64 of the cylinder body 32B and the other end rod part 81 having a larger diameter than the one end rod part 80 and coaxially coupled to the base end (top end) of the one end rod part 80 so as to protrude upward from the top rod guide member 63 of the cylinder body 32B. Therefore, the rod 33B can reliably be guided to reciprocate in the cylinder body 32B.

The compressed gas operation chamber 50B containing the compressed gas 34 is formed nearly in the entire area of the cylinder body 32B. The coupling part 82 between the one end rod part 80 and the other end rod part 82 is housed in the cylinder body 32B. The coupling part 82 has the annular pressure receiving part 85 receiving the gas pressure of the compressed gas 34 in the compressed gas operation chamber 50B. Therefore, the rod 33B can reliably be retained and biased upward by the compressed gas 34. The volume change of the compressed gas operation chamber 50B as a result of the rod 33B reciprocating, namely the change in the gas pressure of the compressed gas 34, can be suppressed to pull and bias the spindle unit 10 by a nearly constant force.

The rod 33B does not slide directly on the inner surface of the cylinder body 33B. Therefore, the cylinder body 32B (barrel 60) does not need to have a precise mirror-finished inner surface. This is advantageous in producing the cylinder body 32B. The cylinder body 32B of the gas spring 31B has a relatively large diameter. The pressure receiving part 85 can have a relatively large area to increase the basing force without excessively reducing the diameter of the one end rod part 80. Then, a heavy spindle unit 10 can reliably be biased upward. As for the rest, the same operation and advantages as of Embodiment 1 can be obtained.

### EMBODIMENT 4

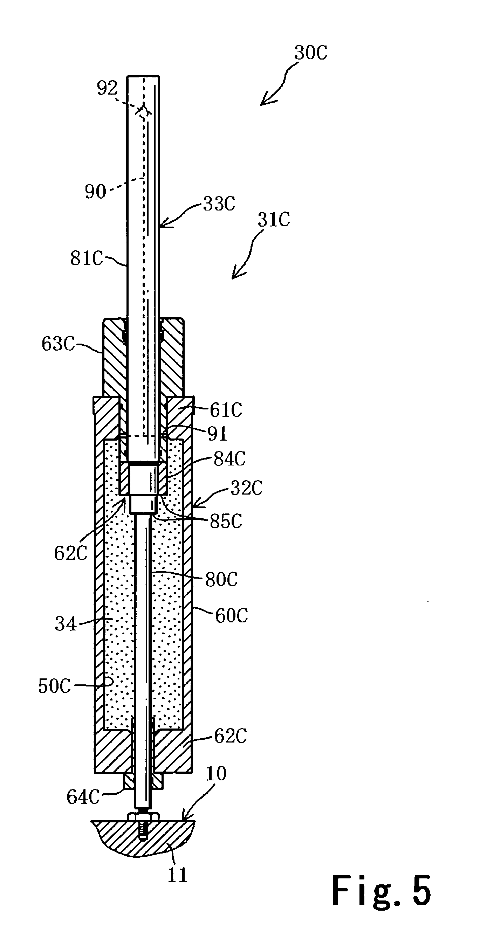

As shown in Fig.5, a spindle balancer 30C has a gas spring 31C. The gas spring 31C is applied to a machine tool M in place of the gas spring 31 of Embodiment 1. The gas spring 31C has a cylinder body 32C, a rod 33C, and the compressed gas 34. The cylinder body 32C has a compressed gas operation chamber 50C, a barrel 60C, a top end wall 61C, a bottom end wall 62C, a top rod guide member 63C, and a bottom rod guide member 64C. The rod 33C has one end rod part 80C, the other end rod part 81C, a locking part 84C, and a pressure receiving part 85C.

The gas spring 31C is different from the gas spring 31B of Embodiment 3 in size and shape; however, they basically have the same structure and the detailed explanation is omitted. In the gas spring 31C, the compressed gas operation chamber 50C is filled with the compressed gas 34. As a means for adjusting the gas pressure of the compressed gas 34, the one end rod part 80C and top rod guide member 63C have gas passages 90 and 91 connecting the compressed gas operation chamber 50C to the outside, respectively. The gas passage 90 has a check valve 92.

A specific gas supply unit (not shown) is connected to the gas passage 90 to supply the compressed gas 34 and control the gas pressure thereof. The gas spring 31C of the spindle balancer 30C is downsized and therefore suitable for biasing a light spindle unit 10 upward. As for the rest, the same operation and advantages as of Embodiment 3 can be obtained. The means for refilling the compressed gas operation chamber with the compressed gas and controlling the gas pressure thereof can also be provided to the gas springs 30, 31A, and 31B of Embodiments 1 to 3.

### EMBODIMENT 5

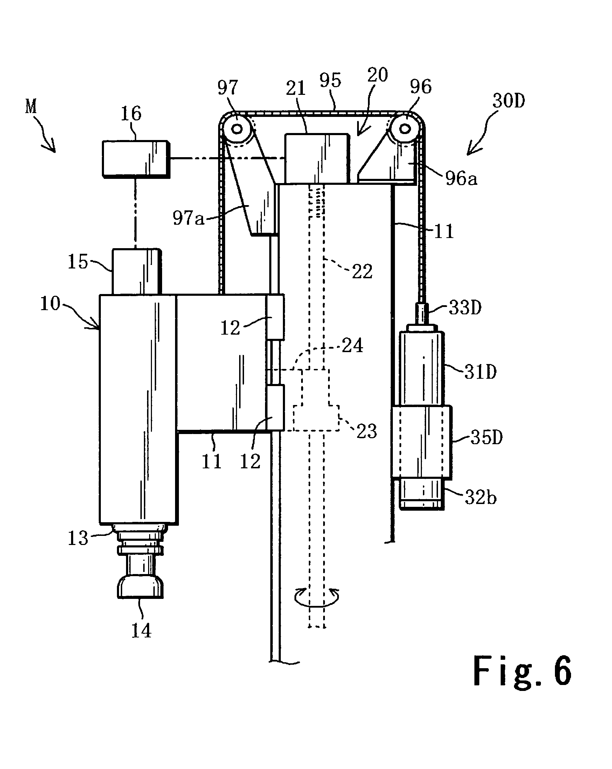

As shown in Fig.6, a spindle balancer 30D comprises a gas spring 31D. The gas spring 31D has a rod 33D, the one end of which is coupled to the top end of the spindle unit 10 via a chain 95 and sprockets 96 and 97. This spindle balancer 30D is applied to the same machine tool M as in Embodiment 1. The spindle balancer 30D has a cylinder body 31D fastened for example to the rear wall of the column 1 via a bracket 35D and a rod 33D extending from the cylinder body 30D upward.

The sprocket 96 is provided above the gas spring 31D and rotatably supported by a bracket 96a secured to the column 1. The sprocket 97 is provided above the spindle unit 10 and rotatably supported by a bracket 97a secured to the column 1. The chain 95 is passed around the sprockets 96 and 97 with one end coupled to the top end of the rod 33D and the other end coupled to the top end of the spindle unit 10. The gas spring 31D can be any of the gas springs 31, 31A, 31B, and 31C of Embodiments 1 to 4.

In the spindle balancer 30D, one end of the rod 33D is coupled to the top end of the spindle unit 10 via the chain 95 and sprockets 96 and 97. The gas spring 31D has an increased degree of freedom in positing to reliably pull and bias the spindle unit 10 upward. Therefore, for example, the gas spring 31D can be provided horizontally on the top wall of the column 1 or in various other orientations at various other positions and coupled to the spindle unit 10 via the chain and sprockets to pull and bias the spindle unit 10 upward.

### EMBODIMENT 6

In another not-shown structure, the other end of the cylinder body can be coupled to the spindle unit so that the biasing force of the gas spring that is applied on the cylinder body serves to pull and bias the spindle unit upward, whereby the biasing force of the gas spring serves to reduce the load of the lift mechanism. In such a case, the gas spring can be any of the gas springs 31, 31A, 31B, 31C, and 31D of Embodiments 1 to 5.

The present invention can be realized with various modifications other than those disclosed above without departing from the scope of the present invention. Furthermore, the present invention is applicable to various machine tools having a spindle unit and a lift mechanism for vertically moving the spindle unit.

## Claims

1. A machine tool spindle balancer for a machine tool comprising a spindle unit having a spindle for mounting a tool, an electric motor for rotating the spindle and a lift means for moving the spindle unit vertically, **characterized in that**:
the machine tool spindle balancer comprises a gas spring having a cylinder body, a rod reciprocating in relation to the cylinder body over a specific stroke at least nearly equal to a vertical stroke of the spindle unit and having at least one end portion protruding from one end of the cylinder body, and a compressed gas contained in at least a part of the cylinder body and biasing the rod in a retracting direction in which the one end portion of the rod that protrudes from the cylinder body is reduced;
said rod is coupled to the spindle unit at one end so that the spindle unit is pulled and biased upward by a biasing force of the gas spring that is applied on the rod; and
said biasing force of the gas spring serves to reduce a load of the lift means.

2. The machine tool spindle balancer according to claim 1 **characterized in that** said rod has at an end a piston part fitted in the cylinder body in an airtight and slidable manner, a compressed gas operation chamber containing the compressed gas is formed in the cylinder body on a rod side of said piston part, and a compressed gas filled chamber that is independent from the compress gas operation chamber, filled with the compressed gas and communicates with the compressed gas operation chamber via a gas communication passage is provided.

3. The machine tool spindle balancer according to claim 2 **characterized in that** said cylinder body has an inner barrel in which said piston part is fitted and an outer barrel provided radially outside said inner barrel and said compressed gas filled chamber is formed between the inner and outer barrels.

4. The machine tool spindle balancer according to claim 1 **characterized in that** said rod has one end rod part forming said one end portion and the other end rod part having a larger diameter than the one end rod part and coaxially coupled to an end of the one end rod part to protrude from the other end of the cylinder body, and said compressed gas operation chamber containing the compressed gas is formed nearly in an entire area of the cylinder body; and
a coupling part coupling said one end rod part and the other end rod part is housed in the cylinder body and said coupling part has an annular pressure receiving part receiving the gas pressure of the compressed gas in said compressed gas operation chamber.

5. The machine tool spindle balancer according to any of claims 1 to 4 **characterized in that** said cylinder body of the gas spring is provided vertically above the spindle unit and one end of said rod is coupled to a top end of the spindle unit.

6. The machine tool spindle balancer according to any of claims 1 to 4 **characterized in that** one end of said rod is coupled to a top end of the spindle unit via a chain and sprockets.
